# EUROPEAN PATENT SPECIFICATION

(11) **EP 3 288 234 B1**
(45) Date of publication and mention of the grant of the patent: **02.09.2020**
(21) Application number: 17183837.8
(22) Date of filing: 28.07.2017
(51) Int. Cl.: H04L 29/06, H04L 29/08, G06F 21/31, G06F 21/44, G06F 21/60, H04N 1/00

(54) **INFORMATION PROCESSING APPARATUS, INFORMATION PROCESSING SYSTEM, INFORMATION PROCESSING METHOD, AND CARRIER MEANS**
INFORMATIONSVERARBEITUNGSVORRICHTUNG, INFORMATIONSVERARBEITUNGSSYSTEM, INFORMATIONSVERARBEITUNGSVERFAHREN UND TRÄGERANORDNUNG
APPAREIL DE TRAITEMENT D'INFORMATIONS, SYSTÈME DE TRAITEMENT D'INFORMATIONS, PROCÉDÉ DE TRAITEMENT D'INFORMATIONS ET MOYEN DE SUPPORT

(30) Priority: 22.08.2016 JP 2016162169
(43) Date of publication of application: 28.02.2018
(73) Proprietor: Ricoh Company, Ltd., Tokyo 143-8555 (JP)
(72) Inventor: KONDO, Seiichi, Ohta-ku, Tokyo 143-8555 (JP); FUKUDA, Yasuharu, Ohta-ku, Tokyo 143-8555 (JP); OHZAKI, Hiroki, Ohta-ku, Tokyo 143-8555 (JP)
(74) Representative: Watkin, Timothy Lawrence Harvey

(56) References cited:
- US-A1- 2014 126 016
- US-A1- 2014 129 607

## Description

### BACKGROUND

### Technical Field

The present invention relates to an information processing apparatus, an information processing system, an information processing method, and carrier means such as a recording medium storing an information processing program.

### Background Art

Nowadays, a service is known, which provides a combination of multiple functions (e.g., scan, print, and upload to external services etc.). For example, a service that uploads digital data generated by scanning to an external service is known. The service described above is implemented by performing one or more operations each operation implementing a specific function, as a sequence of operations.

An image forming apparatus that performs a sequence of operations according to an instruction including processing information that describes one or more operations as the sequence of operations is also known (e.g., JP-2004-112636-A).

However, in case of providing the service that uploads the digital data generated by scanning to the external service, it is required that the system performing the sequence of operations implementing such service performs authentication with the external service (i.e., proxy authentication).

In view of the above, a technology that performs proxy authentication in the sequence of operations to be performed in cooperation with the external service is desired.

US 2014/129607 A1 discloses an information processing apparatus that stores order information defining an order in which a plurality of processes are to be executed with respect to data.

### SUMMARY

The invention proposes an information processing apparatus as defined by claim 1, a corresponding method according to claim 7 and a program according to claim 8. Example embodiments of the present invention provide a novel information processing apparatus capable of communicating with one or more apparatuses that includes a flow storing unit that stores, for each series of operations to be performed in cooperation with an external service, program identification information for identifying each of one or more programs that performs one operation of the series of operations and flow information defining an order of executing the one or more programs performing the series of operations, associated with flow identification information for identifying the flow information, an authentication storing unit that stores authentication information used for authenticating the external service associated with user identification information for identifying the user, a receiving unit that receives information on electronic data, flow identification information, and user identification information, from one of the apparatuses, an acquisition unit that acquires, from among the flow information stored in the flow storing unit, flow information associated with the flow identification information received by the receiving unit, and an executing unit that executes the series of operations in cooperation with the external service using the electronic data based on the information on the electronic data received by the receiving unit by executing each of the programs identified by the program identification information defined in the flow information acquired by the acquisition unit in accordance with the order of executing the programs defined in the flow information. In executing the series of operations in cooperation with the external service, the executing unit authenticates the external service by using the authentication information stored in the authentication storing unit associated with the user identification information received by the receiving unit.

Further example embodiments of the present invention provide a method of processing information and carrier means such as a recording medium storing an information processing program.

In the embodiments described below, an information processing apparatus that is capable of performing proxy authentication in a sequence of operations in cooperation with an external service is provided.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a diagram illustrating a configuration of an information processing system according to an embodiment of the present invention;
FIG. 2 is a diagram illustrating a hardware configuration of a service providing system and a computer terminal (personal computer (PC) terminal) according to an embodiment of the present invention;
FIG. 3 is a diagram illustrating a hardware configuration of an apparatus according to an embodiment of the present invention;
FIG. 4 is a diagram illustrating a functional configuration of the information processing system according to an embodiment of the present invention;
FIGs. 5A, 5B, 5C, and 5D are diagram illustrating a common interface (I/F) and a specific I/F according to an embodiment of the present invention;
FIG. 6 is a diagram illustrating a functional configuration of a logic processor according to an embodiment of the present invention;
FIG. 7 is a diagram illustrating processing flow information according to an embodiment of the present invention;
FIGs. 8A and 8B are a sequence chart illustrating an operation saving authentication information used for proxy authentication according to an embodiment of the present invention;
FIG. 9 is a diagram illustrating an authentication information table according to an embodiment of the present invention;
FIG. 10 is a diagram illustrating setting information for proxy authentication according to an embodiment of the present invention;
FIG. 11 is a diagram illustrating a screen for saving authentication information of a storage A according to an embodiment of the present invention;
FIG. 12 is a diagram illustrating setting information for proxy authentication according to an embodiment of the present invention;
FIG. 13 is a diagram illustrating a screen for saving authentication information of a storage A according to an embodiment of the present invention;
FIG. 14 is a diagram illustrating an operation of using a "scan to storage A" service according to an embodiment of the present invention;
FIG. 15 is a diagram illustrating screen information according to an embodiment of the present invention;
FIG. 16 is a diagram illustrating an application screen for using a "scan to storage A" service according to an embodiment of the present invention, and
FIG. 17 is a sequence chart illustrating an operation of executing processing flow implementing the "scan to storage A" service according to an embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

A more complete appreciation of the disclosure and many of the attendant advantages thereof will be readily obtained as the same becomes better understood by reference to the following detailed description when considered in conjunction with the accompanying drawings.

Embodiments of the present invention are described below in detail with reference to figures. In figures, same symbols are assigned to same or corresponding parts, and their descriptions are simplified or omitted appropriately.

Exemplary embodiments of this disclosure are now described below with reference to the accompanying drawings.

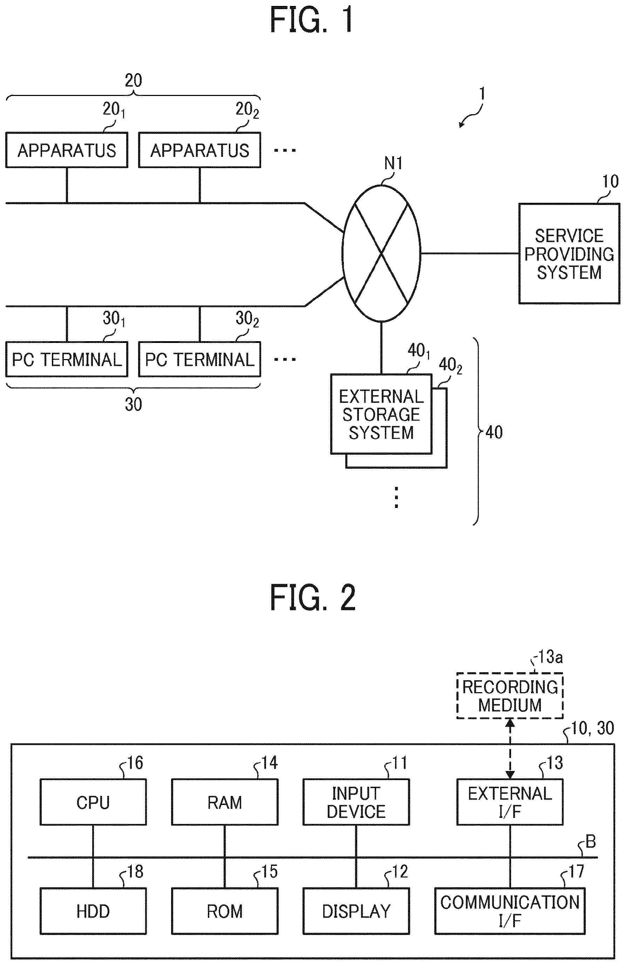

First, descriptions are given below of a system configuration of the information processing system 1 according to the present embodiment with reference to FIG. 1. FIG. 1 is a diagram illustrating a configuration of an information processing system in this embodiment.

The information processing system 1 includes a service providing system 10, one or more apparatuses 20, one or more personal computer (PC) terminals 30, and an external storage system 40, and those components are communicably connected to each other via a broad-based network N1 such as the Internet etc.

The service providing system 10 is implemented by one or more information processing apparatuses functioning as a server, and provides various services implemented by a series of operations to be performed in cooperation with external services such as a cloud service etc. via the network N1.

The services provided by the service providing system 10 in this embodiment is specifically described later. Hereinafter, the series of operations is also referred to as "processing flow".

In this embodiment, the cloud service is described as an example of the external services. However, the external service is not limited to the cloud service. For example, this embodiment may be applied to services provided by an application service provider (ASP) and various external services such as web services provided via a network etc.

The apparatus 20 is one of various electronic apparatuses used by a user. That is, examples of the apparatus 20 are image forming apparatuses such as a multifunction peripheral (MFP) etc., a PC, a projector, an electronic whiteboard, and a digital camera etc. The user may utilize various services provided by the service providing system 10 by using the apparatus 20.

Hereinafter, in case of distinguishing among multiple apparatuses 20, they are described using a subscript such as "the apparatus 20i" and "the apparatus 20₂" etc.

Examples of the PC terminal 30 are a desktop PC, a laptop PC, a smartphone, and a tablet device etc. used by a user. The user may utilize various services provided by the service providing system 10 by using the PC terminal 30.

Hereinafter, in case of distinguishing among multiple PC terminals 30, they are described using a subscript such as "the PC terminal 30i" and "the PC terminal 30₂" etc.

The external storage system 40 is a computer system including one or more computers functioning as a server, and provides a cloud service that is called as a storage service (or an online storage) via a network N1. The storage service is a service that rents a storage area of a storage device in the external storage system 40 to users.

Hereinafter in case of distinguishing among multiple external storage systems 40, they are described using a subscript such as "the external storage system 40i" and "the external storage system 40₂" etc. In addition, a name of the storage service provided by the external storage system 40₁ is referred to as "storage A", and a name of the storage service provided by the external storage system 40₂ is referred to as "storage B" etc.

It should be noted that the external storage system 40 may be a system that is implemented by multiple information processing apparatuses.

In addition, the configuration of the information processing system 1 illustrated in FIG. 1 is just an example and not limited to that configuration. For example, the information processing system 1 in this embodiment may include various apparatuses that at least inputs electronic data or outputs electronic data, and these apparatuses may utilize various services provided by the service providing system 10.

Next, a hardware configuration of the service providing system 10 and the PC terminal 30 included in the information processing system 1 in this embodiment is described below with reference to FIG. 2. FIG. 2 is a diagram illustrating a hardware configuration of the service providing system 10 and the PC terminal 30 according to this embodiment. Since the service providing system 10 includes a hardware configuration similar to the PC terminal 30, hereinafter, the hardware configuration of the service providing system 10 is mainly described below.

The service providing system 10 illustrated in FIG. 2 includes an input device 11, a display 12, an external interface (I/F) 13, and a random access memory (RAM) 14. In addition, the service providing system 10 includes a read only memory (ROM) 15, a central processing unit (CPU) 16, a communication I/F 17, and a hard disk drive (HDD) 18. These hardware components described above are connected with each other via a bus B.

The input device 11 includes a keyboard, a mouse, and a touch panel etc., and various operating signals are input into the input device 11 by user operation. The display 12 includes a display etc., and the display 12 displays a processing result by the service providing system 10. It should be noted that at least any one of the input device 11 and the display 12 may be connected to the service providing system 10 and used as needed.

The communication I/F 17 is an interface that connects the service providing system 10 to the network N1. As a result, the service providing system 10 may perform communication via the communication I/F 17.

The HDD 18 is a nonvolatile storage device that stores programs and data. The programs and data stored in the HDD 18 include an operating system (OS) that controls the entire service providing system 10 and application programs that provide various functions on the OS etc.

It should be noted that the service providing system 10 may utilize a drive device using a flash memory as a storage medium (such as a solid state drive (SSD)) instead of the HDD 18. The HDD 18 manages the stored programs and data using a predetermined file system and/or a database (DB).

The external I/F 13 is an interface with an external apparatus. A storage medium 13a is an example of the external apparatus. With this configuration, the service providing system 10 can read/write data from/to the storage medium 13a via the external I/F 13. Examples of the storage medium 13a are a flexible disk, a compact disc (CD), a digital versatile disk (DVD), a SD memory card, and a Universal Serial Bus (USB) memory etc.

The ROM 15 is a nonvolatile semiconductor memory that can keep storing programs and data even after power is turned off. The ROM 15 stores a Basic Input/Output System (BIOS) to be executed during a boot-up sequence of the service providing system 10, an OS configuration data, and programs and data such as network settings data etc. The RAM 14 is a volatile semiconductor memory, which temporarily stores programs or data.

The CPU 16 controls the entire service providing system 10 so as to implement functions of the service providing system 10 by reading programs and data from the storage device such as the ROM 15 and the HDD 18 etc., expanding them into the RAM 14, and performing operations.

With the hardware configuration illustrated in FIG. 2, the service providing system 10 and the PC terminal 30 may implement various operations described later.

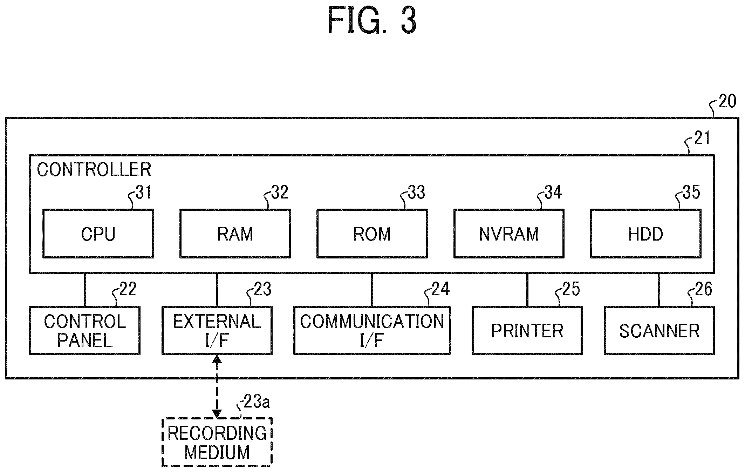

Next, assuming that the apparatus 20 included in the information processing system 1 in this embodiment is an image forming apparatus, a hardware configuration is described below with reference to FIG. 3. FIG. 3 is a diagram illustrating a hardware configuration of the apparatus 20 according to this embodiment.

The apparatus 20 illustrated in FIG. 3 includes a controller 21, a control panel 22, an external I/F 23, a communication I/F 24, a printer 25, and a scanner 26. In addition, the controller 21 includes a CPU 31, a RAM 32, a ROM 33, a non-volatile random access memory (NVRAM) 34, and a HDD 35.

The ROM 33 is a nonvolatile semiconductor memory that stores various programs and data. The RAM 32 is a volatile semiconductor memory, which temporarily holds programs or data. For example, the NVRAM 34 stores setting information etc. In addition, the HDD 35 is a nonvolatile storage device that stores various programs and data.

The CPU 31 controls the entire apparatus 20 and implements functions of the apparatus 20 by reading programs, data, and configuration information etc. from the ROM 33, the NVRAM 34, and the HDD 35 etc. into the RAM 32 to perform operations.

The control panel 22 includes an input device that accepts user operation and a display that displays various information. The external I/F 23 is an interface with an external apparatus. A storage medium 23a is an example of the external apparatus. As a result, the apparatus 20 can read/write data from/to the storage medium 23a via the external I/F 23. Examples of the storage medium 23a are an IC card, a flexible disk, a compact disc (CD), a digital versatile disk (DVD), a SD memory card, and a Universal Serial Bus (USB) memory etc.

The communication I/F 24 is an interface that connects the apparatus 20 to the network. As a result, the apparatus 20 may perform communication via the communication I/F 24. The printer 25 prints print data on a recording sheet such as paper. The scanner 26 scans a document and generates an electronic file (an image file).

With the hardware configuration illustrated in FIG. 3, the apparatus 20 implements various operations described later.

Here, the services provided by the service providing system 10 in this embodiment are described below. In the description below, it is assumed that the apparatus 20 is an image forming apparatus.

For example, the service providing system 10 in this embodiment provides a service (i.e., "scan to storage A" service) that uploads an electronic file generated by scanning a document by the apparatus 20 to a storage A (i.e., the external storage system 401).

Hereinafter, in the below description, it is assumed that the service providing system 10 in this embodiment provides the "scan to storage A" service described above.

However, the service provided by the service providing system 10 is not limited to that. For example, the service providing system 10 in this embodiment may provide a service (i.e., "scan to storage B" service) that uploads an electronic file generated by scanning a document by the apparatus 20 to a storage B (i.e., the external storage system 402). In addition, for example, the service providing system 10 may provide a service that downloads an electronic file stored in the external storage system 40 and prints out by the apparatus 20. Furthermore, for example, the service providing system 10 in this embodiment may provide a service that performs optical character recognition (OCR) on an electronic file generated by scanning a document by the apparatus 20 and uploads the electronic file to the storage A (i.e., the external storage system 401).

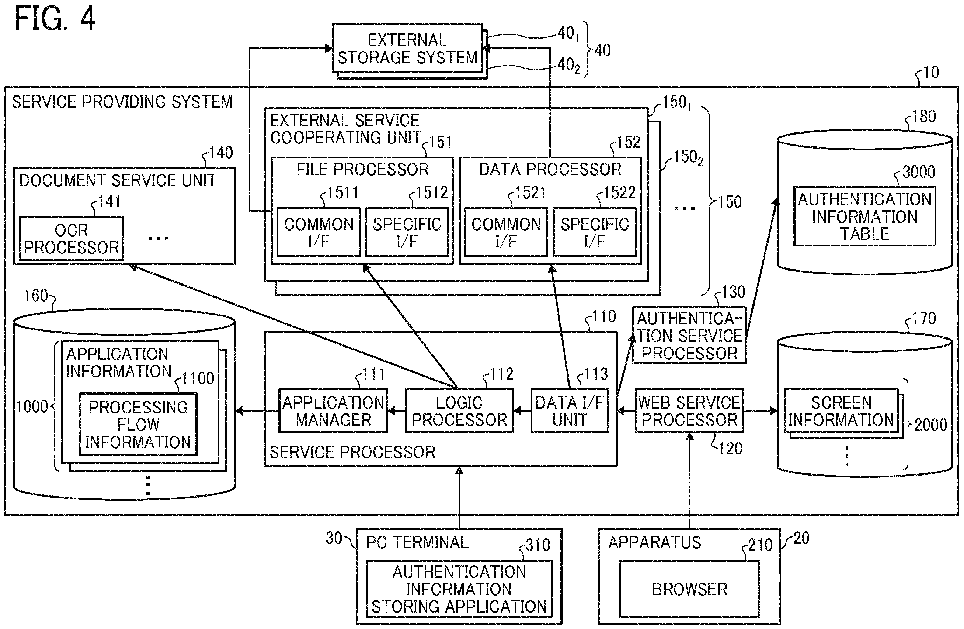

Next, descriptions are given below of a functional configuration of the information processing system 1 according to the present embodiment with reference to FIG. 4. FIG. 4 is a diagram illustrating a functional configuration of the information processing system 1 according to this embodiment.

The apparatus 20 illustrated in FIG. 4 is installed with a web browser 210 (hereinafter simply referred to as "browser 210") executed by the CPU 31 etc. The user of the apparatus 20 may utilize various services provided by the service providing system 10 by using the browser 210.

The PC terminal 30 illustrated in FIG. 4 is installed with an authentication information storing application 310 executed by the CPU 31 etc. By using the authentication information storing application 310, the user of the PC terminal 30 may store information (authentication information) used for authentication for the storage A (i.e., external storage system 401) in the service providing system 10.

It should be noted that the authentication information storing application 310 is not limited to an application program installed in the PC terminal 30. For example, the authentication information storing application 310 may be implemented by executing a JavaScript (registered trademark) program etc. acquired from the service providing system 10 on the web browser running on the PC terminal 30. That is, the authentication information storing application 310 may be a web application.

The service providing system 10 illustrated in FIG. 4 includes an input/output service processor 110, a web service processor (a receiving unit) 120, an authentication service processor 130, a document service unit 140, and one or more external service cooperating units 150. The components described above may be implemented by the CPU 16 executing one or more programs installed in the service providing system 10.

In addition, the service providing system 10 includes an application information storing unit (a flow storing unit) 160, a screen information storing unit (a screen information memory) 170, and an authentication information storing unit (an authentication storing unit) 180. The storing units described above may be implemented by the HDD 18. It should be noted that at least any one of the application information storing unit 160, the screen information storing unit 170, and the authentication information storing unit 180 may be implemented by a storage device etc. connected to the service providing system 10 via a network.

The input/output service processor 110 performs an operation regarding the service that the service providing system 10 provides. Here, the input/output service processor 110 includes an application manager (an acquisition unit) 111, a logic processor (an executing unit) 112, and a data I/F unit 113.

The application manager 111 manages application information 1000 stored in the application information storing unit 160. It should be noted that the application information 1000 is an application that provides a service implemented by the series of operations. That is, various services that the service providing system 10 provides are provided by the application information 1000.

In addition, in response to a request from the logic processor 112, the application manager 111 sends processing flow information 1100 included in the application information 1000 back. It should be noted that the processing flow information 1100 is information defining the series of operations that implements a service provided by the application information 1000.

In response to a request from the web service processor 120, the logic processor 112 acquires the processing flow information 1100 included in the application information 1000 from the application manager 111. Subsequently, based on the processing flow information 1100 acquired from the application manager 111, the logic processor 112 performs the series of operations (processing flow) that implements the service provided by the application information 1000. As a result, the service providing system 10 in this embodiment may provide various services.

In addition, in response to a request from the authentication information storing application 310, the logic processor 112 encrypts the authentication information for the external storage system 40 and requests the authentication service processor 130 to store the encrypted authentication information. It should be noted that the logic processor 112 will be described later in detail.

In response to a request from the web service processor 120, the data I/F unit 113 requests a data processor 152 in the external service cooperating unit 150 to perform various operations (e.g., acquiring a folder list etc.).

In response to a request from the browser 210, the web service processor 120 sends screen information 2000 stored in the screen information storing unit 170 back. It should be noted that the screen information 2000 is information defining a screen (application screen) for using the service provided by the application information 1000. For example, in the screen information 2000, an application screen is defined by using formats interpretable by the browser 210 such as Hypertext Markup Language (HTML), Extensible Hypertext Markup Language (XHTML), Cascading Style Sheets (CSS), and JavaScript etc.

As a result, on a control panel 22 of the apparatus 20, an application screen for using the service provided by the service providing system 10 by using the browser 210.

In addition, in response to a request from the browser 210, the web service processor 120 transfers various requests to the input/output service processor 110. For example, in response to a request from the browser 210, the web service processor 120 requests the logic processor 112 in the input/output service processor 110 to perform a processing flow implementing the "scan to storage A" service.

In response to a request from the logic processor 112, the authentication service processor 130 stores the encrypted authentication information in an authentication information table 3000 stored in the authentication information storing unit 180. It should be noted that the authentication information table 3000 is a table storing encrypted authentication information (such as user ID and password etc.) for performing authentication (proxy authentication) between the service providing system 10 and the external storage system 40.

In addition, in response to a request from the logic processor 112, the authentication service processor 130 transfers the authentication information stored in an authentication information table 3000 to the logic processor 112.

As described above, the authentication service processor 130 manages the authentication information used for proxy authentication between the service providing system 10 and the external storage system 40.

The document service unit 140 performs a predetermined operation included in the series of operations (processing flow) based on the processing flow information 1100. Here, for example, the document service unit 140 includes an OCR processor 141 that performs OCR operation on an electronic file.

It should be noted that, for example, the document service unit 140 may also include a data converting unit that converts a data format of an electronic file into a predetermined data format, a compressing/expanding unit that compresses or expands an electronic file, or a mail transferring unit that transfers e-mail attaching an electronic file etc.

As described above, the document service unit 140 includes various functional units that perform a predetermined operation included in the series of operations (processing flow). Therefore, the document service unit 140 is implemented by a group of programs (modules) that provide various functions described above

In response to a request from the logic processor 112 and the data I/F unit 113, the external service cooperating unit 150 requests the external storage system 40 to perform various operations (e.g., acquiring a folder list etc.).

For each external storage system 40 that performs an operation in cooperation with the service providing system 10, the service providing system 10 in this embodiment includes the external service cooperating unit 150 corresponding to each external storage system 40. That is, the service providing system 10 in this embodiment includes the external service cooperating unit 150₁ that requests the external storage system 401 to perform various operations. Similarly, the service providing system 10 in this embodiment includes the external service cooperating unit 150₂ that requests the external storage system 402 to perform various operations and so on.

Hereinafter, as described above, in case of distinguishing among multiple external service cooperating units 150, they are described using a subscript such as "the external service cooperating unit 150i" and "the external service cooperating unit 150₂" etc.

Here, the external service cooperating unit 150 includes a file processor 151 that receives a request from the logic processor 112 and a data processor 152 that receives a request from the data I/F unit 113.

The file processor 151 includes a common I/F 1511 and a specific I/F 1512 defining an application programming interface (API) for performing an operation on an electronic file stored in the external storage system 40 (such as acquiring, storing, and editing an electronic file etc.).

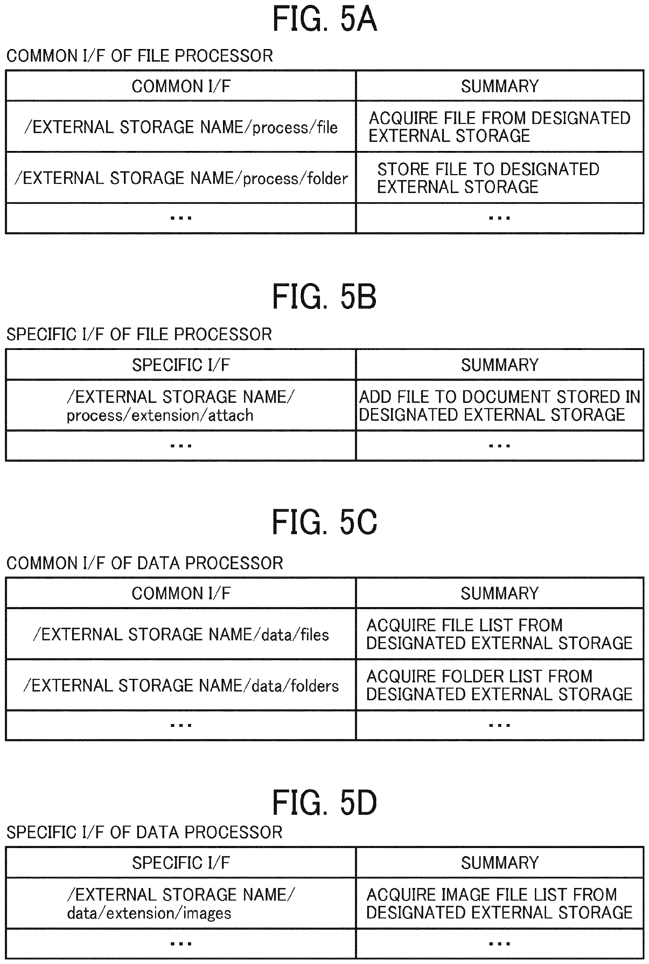

The common I/F 1511 is an API used commonly among multiple external storage system 40 such as an API illustrated in FIG. 5A. That is, the common I/F 1511 in the file processor 151 is a group of APIs for using functions regarding operating files that all external storage systems 40 may use (such as acquiring and storing a file etc.).

By contrast, the specific I/F 1512 is an API that may be used for a specific external storage system 40 such as an API illustrated in FIG. 5B. That is, the specific I/F 1512 in the file processor 151 is a group of APIs for using functions regarding operating files that a specific external storage system 40 may use (such as adding a file to a document etc.).

As a result, the common I/F 1511 is defined for all external service cooperating units 150 in a similar fashion. By contrast, the specific I/F 1512 is defined for the external service cooperating unit 150 corresponding to the specific external storage system 40 that may use the API defined by the specific I/F 1512.

The data processor 152 includes a common I/F 1521 and a specific I/F 1522 defining an API for acquiring metadata such as bibliographic information etc. of the electronic file stored in the external storage system 40 (such as a file list and a folder list etc.) etc.

The common I/F 1521 is an API used commonly among multiple external storage systems 40 such as an API illustrated in FIG. 5C. That is, the common I/F 1521 in the data processor 152 is a group of APIs for using functions regarding acquiring metadata that all external storage systems 40 may use (such as acquiring a file list and acquiring a folder list etc.).

By contrast, the specific I/F 1522 is an API that may be used for a specific external storage system 40 such as an API illustrated in FIG. 5D. That is, the specific I/F 1522 in the data processor 152 is a group of APIs for using functions regarding acquiring metadata that a specific external storage system 40 may use (such as acquiring an image file list etc.).

As a result, the common I/F 1521 is defined for all external service cooperating units 150 in a similar fashion. By contrast, the specific I/F 1522 is defined for the external service cooperating unit 150 corresponding to the specific external storage system 40 that may use the API defined by the specific I/F 1522.

As described above, for each external storage system 40 that performs an operation in cooperation with the service providing system 10, the service providing system 10 in this embodiment includes the external service cooperating unit 150 corresponding to each external storage system 40. As a result, in case of adding or deleting (hereinafter referred to as "adding etc.") the external storage system 40 as a cooperating target, it is possible to add etc. the external service cooperating unit 150 corresponding to the external storage system 40 to be added etc. to the service providing system 10.

Consequently, in the service providing system 10 in this embodiment, it is possible to minimize an effect in accordance with adding etc. the external storage system 40 as the cooperating target. In other words, in the service providing system 10 in this embodiment, it is possible to add etc. the external storage system 40 as the cooperating target instead of affecting other functional units (such as the input/output service processor 110 and the document service unit 140 etc.). It should be noted that it is possible to add etc. the external service cooperating unit 150 by using a Software Development Kit (SDK).

In addition, the file processor 151 in the external service cooperating unit 150 defines the common I/F 1511 and the specific I/F 1512 using different modules etc. Furthermore, the API defined in the common I/F 1511 and the specific I/F 1512 may be used by specifying "an external storage name" (i.e., a name of the storage service provided by the external storage system 40). That is, in the API defined in the common I/F 1411 and the specific I/F 1412, "the external storage name" is variable.

As a result, in case of adding the external service cooperating unit 150, it is possible to reuse the common I/F 1511 defined in the file processor 151 in another external service cooperating unit 150. In other words, in case of adding the external service cooperating unit 150, regarding the file processor 151 in the external service cooperating unit 150 to be added, it is required to develop the specific I/F 1512 only. The same goes for the common I/F 1521 and the specific I/F 1522 in the data processor 152.

The application information storing unit 160 stores the application information 1000. The application information 1000 is stored in the application information storing unit 160 associated with an application ID for identifying the application information 1000. Furthermore, a name of the application information 1000 (application name) may be associated with the application information 1000.

Here, the application information 1000 includes the processing flow information 1100. For example, in the application information 1000 that provides the "scan to storage A" service, the processing flow information 1100 that defines the series of operations implementing that service. That is, in the application information 1000 that provides the "scan to storage A" service, the processing flow information 1100 that defines an operation of uploading (distributing) the electronic file generated by scanning a document to the storage A (external storage system 401) is included. It should be noted that the application information 1000 may include two or more processing flow information 1100.

As described above, the processing flow information 1100 is information defining the series of operations (processing flow) that implements a service provided by the application information 1000. It should be noted that the processing flow information 1100 is described later in detail.

The screen information storing unit 170 stores the screen information 2000. The screen information 2000 is stored in the screen information storing unit 170 associated with the application ID. It should be noted that the screen information 2000 is described in detail later.

The authentication information storing unit 180 stores the authentication information table 3000. As described above, in the authentication information table 3000, the encrypted authentication information (such as user ID and password etc.) for performing authentication (proxy authentication) between the service providing system 10 and the external storage system 40 is stored. It should be noted that the authentication information table 3000 is described in detail later.

It should also be noted that each of the input/output service processor 110, the web service processor 120, the authentication service processor 130, the document service unit 140, and the external service cooperating unit 150 may be implemented by separate information processing apparatuses. Similarly, each of the application information storing unit 160, the screen information storing unit 170, and the authentication information storing unit 180 may be implemented by separate storage devices etc.

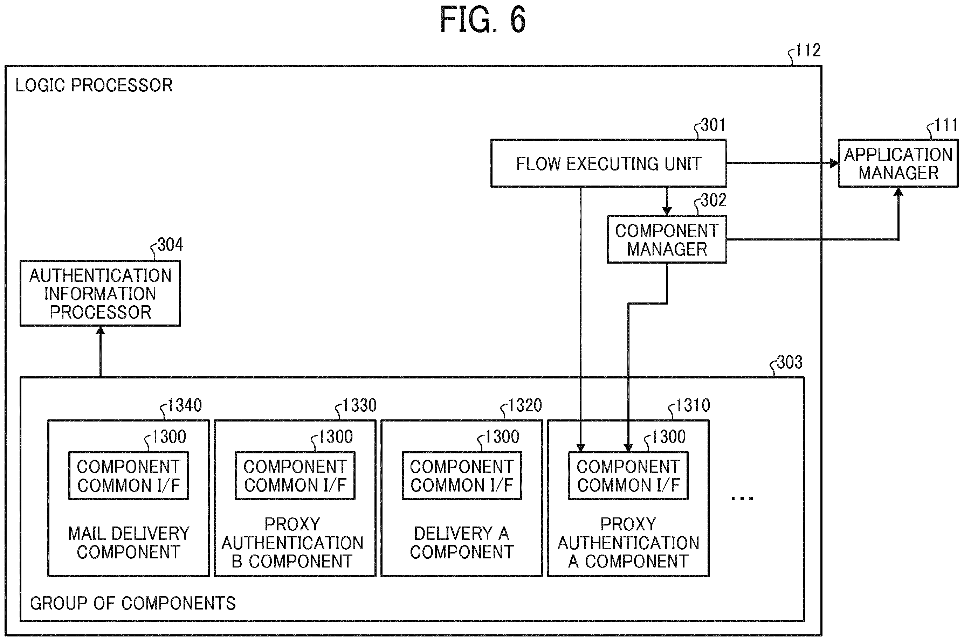

Here, a functional configuration of the logic processor 112 is described in detail below with reference to FIG. 6. FIG. 6 is a diagram illustrating a functional configuration of the logic processor 112 according to this embodiment.

The logic processor 112 illustrated in FIG. 6 includes a flow executing unit 301, a component manager 302, a group of components 303, and an authentication information processor 304.

After receiving a request to perform a processing flow from the web service processor 120, the flow executing unit 301 acquires the processing flow information 1100 corresponding to the request to perform from the application manager 111. Subsequently, the flow executing unit 301 executes the series of operations (processing flow) in the basis of the processing flow information 1100 acquired from the application manager 111.

In addition, after receiving a request to store the authentication information used for proxy authentication from the authentication information storing application 310, the flow executing unit 301 requests a proxy authentication A component 1310 etc. (described later) to store the authentication information included in the request to store. As a result, as described later, the proxy authentication A component 1310 may store the encrypted authentication information in the authentication information table 3000 via the authentication service processor 130.

The component manager 302 manages the components. In response to a request from the flow executing unit 301 and the authentication information storing application 310, the component manager 302 generates a component and sends the generated component back to the flow executing unit 301. Here, generating a component indicates that a component defined by a class or a function etc. is expanded into a memory (such as the RAM 14).

The group of components 303 is a group of components. The group of components 303 includes a proxy authentication A component 1310 and a delivery A component 1320.

The proxy authentication A component 1310 is a component that requests the authentication information processor 304 to encrypt and store the authentication information used for proxy authentication for the storage A (external storage system 401). In addition, the proxy authentication A component 1310 is a component that requests the authentication information processor 304 to acquire and decrypt the authentication information used for proxy authentication for the storage A (external storage system 401).

Here, for example, by using an encryption key predetermined for each external storage system 40, the proxy authentication A component 1310 requests the authentication information processor 304 to store and encrypt the authentication information. In addition, similarly, for example, by using a decryption key predetermined for each external storage system 40, the proxy authentication A component 1310 requests the authentication information processor 304 to acquire and decrypt the authentication information.

Furthermore, the proxy authentication A component 1310 transfers information used by the authentication information storing application to display a screen of saving authentication information (setting information for proxy authentication) to the authentication information storing application 310.

Here, for example, the screen of saving authentication information is a screen for inputting authentication information used for proxy authentication for the storage A by user operation.

The delivery A component 1320 is a component that uploads (delivers) an electronic file to the storage A by using the authentication information for the storage A (external storage system 401).

As a result, after performing proxy authentication for the storage A (external storage system 401), the service providing system 10 may upload the electronic file to the storage A.

It should be noted that, for example, the proxy authentication B component 1330 for requesting the authentication information processor 304 to encrypt and decrypt the authentication information used for proxy authentication for the storage B (external storage system 402) may be included in the group of components 303. Similarly, the delivery B component 1340 that uploads (delivers) an electronic file to the storage B by using the authentication information for the storage B (external storage system 402) may also be included in the group of components 303.

As described above, in the group of components 303, the proxy authentication component and delivery component are included for each external storage system 40.

In addition to the components described above, in the group of components 303, for example, an acquisition A component etc. that downloads (acquires) an electronic file from the storage A (external storage system 401) may also be included. Furthermore, in the group of components 303, for example, a conversion component for converting a data format of an electronic file into a predetermined data format and a compression component for compressing an electronic file etc. may be included.

As described above, in the group of components 303, various types of components that perform an operation for implementing a predetermined function are included.

In addition, each component included in the group of components 303 includes a component common I/F 1300. The component common I/F 1300 is an API defined commonly for each component and includes an API for generating a component and performing an operation of the component.

As described above, by including the component common I/F 1300 by each component, it is possible to minimize an effect in accordance with addition of a component. That is, for example, it is possible to add etc. a component without affecting the flow executing unit 301 and the component manager 302 etc. As a result, in the service providing system 10 in this embodiment, it is possible to reduce developing manpower in accordance with addition etc. of a predetermined function (i.e., addition etc. of a component for performing an operation implementing the function).

In response to a request from the proxy authentication A component 1310 and the proxy authentication B component 1330 etc., the authentication information processor 304 encrypts the authentication information and requests the authentication service processor 130 to store the encrypted authentication information. In addition, in response to a request from the proxy authentication A component 1310 and the proxy authentication B component 1330 etc., the authentication information processor 304 acquires the encrypted authentication information from the authentication service processor 130 and decrypts the encrypted authentication information.

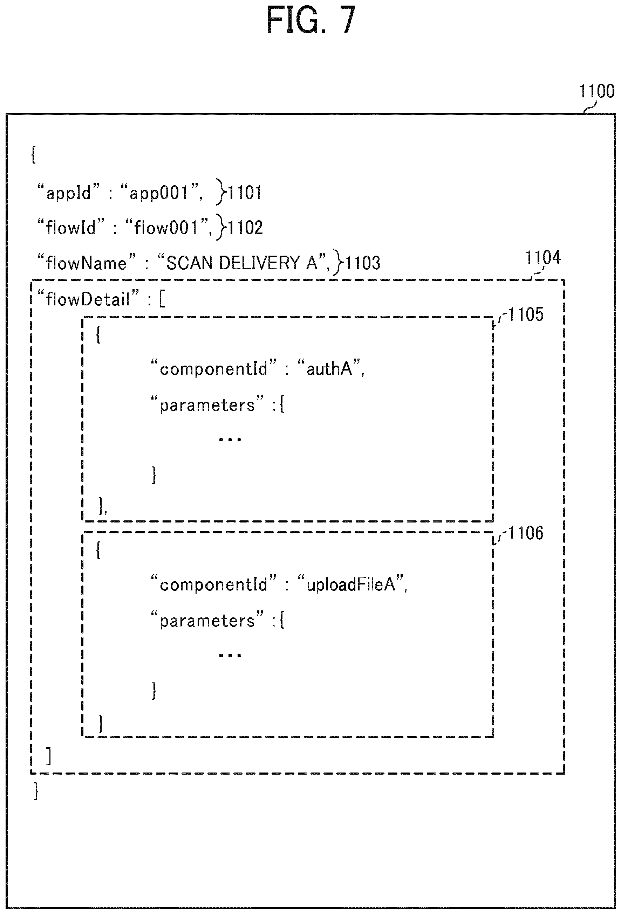

Here, the processing flow information 1100 included in the application information 1000 that provides the "scan to storage A" service is described below with reference to FIG. 7. FIG. 7 is a diagram illustrating the processing flow information 1100 defining the series of operations that implements the "scan to storage A" service according to this embodiment

The processing flow information 1100 illustrated in FIG. 7 is information defining the series of operations that implements the "scan to storage A" service.

The processing flow information 1100 illustrated in FIG. 7 includes an application ID 1101 for identifying the application information 1000 that includes the processing flow information 1100 and a flow ID 1102 for identifying the processing flow information 1100. In addition, the processing flow information 1100 illustrated in FIG. 7 includes a flow name 1103 indicating a name of the series of operations (processing flow) based on the processing flow information 1100 and a flow detail 1104 defining a content of each operation included in the series of operations (processing flow).

The flow detail 1104 includes an operation definitions 1105 and 1106 defining each operation included in the processing flow. In addition, the operation definitions 1105 and 1106 include "componentID" indicating identification information for identifying a component that performs an operation and "parameters" defining parameter information for the component.

More specifically, in the "componentID" of operation definition 1105, identification information "authA" for the proxy authentication A component 1310 is defined. In addition, in the "parameters" of operation definition 1105, parameter information for the proxy authentication A component 1310 is defined.

Similarly, in the "componentID" of operation definition 1106, identification information "uploadFileA" for the delivery A component 1320 is defined. In addition, in the "parameters" of operation definition 1106, parameter information for the delivery A component 1320 is defined. It should be noted that the parameter information for the delivery A component 1320 is a folder ID etc. of a folder as a destination of uploading an electronic file etc.

As described above, in the processing flow information 1100, operation definitions for each operation that constructs the series of operations (processing flow) are defined. As a result, in the service providing system 10 in this embodiment, by performing operations by each component in accordance with the operation definitions included in the processing flow information 1100, it is possible to perform the series of operations that implement the services provided by the application information 1000.

It should be noted that the operations defined in the operation definition included in the processing flow information 1100 illustrated in FIG. 7 is performed sequentially from the top. That is, in the series of operations in the basis of the processing flow information 1100 illustrated in FIG. 7, after the operation defined in the operation definition 1105 is performed, the operation defined in the operation definition 1106 is performed sequentially. However, the configuration is not limited to the configuration described above. For example, it is possible to define information indicating an order of performing operations defined in each operation definition in the processing flow information 1100. Next, an operation of the information processing system 1 in this embodiment is described in detail below.

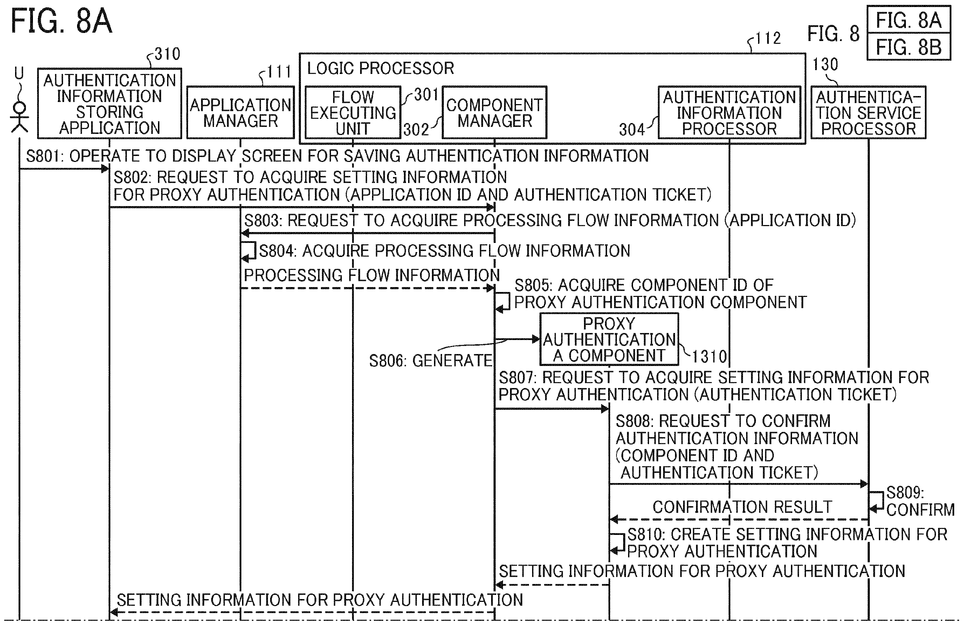

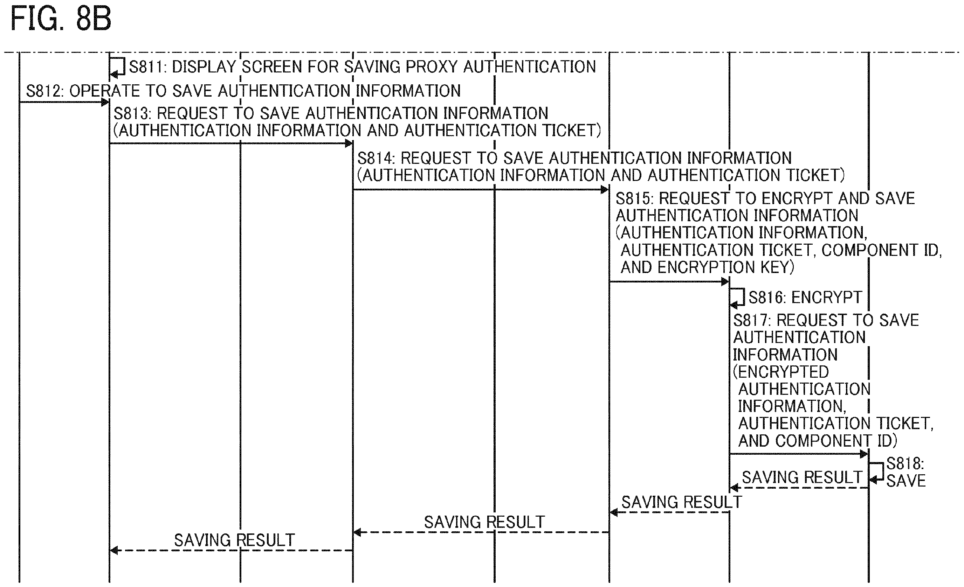

First, an operation of saving authentication information for the storage A in the service providing system 10 before a user U of the PC terminal 30 uses the "scan to storage A" service is described below with reference to FIGs. 8A and 8B. FIGs. 8A and 8B are a sequence chart illustrating an operation saving authentication information used for proxy authentication according to this embodiment.

In S801, the user U of the PC terminal 30 operates to display a screen of saving authentication information. For example, on a predetermined screen displayed after logging in the service providing system 10 using the authentication information storing application 310, the user U may perform the operation by selecting an application name of the application information 1000 that provides the "scan to storage A" service etc.

In S802, after receiving the operation of displaying the screen of saving the authentication information, the authentication information storing application 310 in the PC terminal 30 transfers a request to acquire setting information for proxy authentication to the component manager 302 in the logic processor 112. It should be noted that, in the request to acquire, an application ID of the application information 1000 selected by user operation by the user U in S801 and an authentication ticket published when the user U logged in the service providing system 10 are included. An example of the authentication ticket is a cookie etc., and user ID for identifying the user U in the service providing system 10 is included in the authentication ticket.

In S803, after receiving the request to acquire the setting information for proxy authentication, the component manager 302 transfers a request to acquire processing flow information to the application manager 111. It should be noted that the application ID of the application information 1000 selected by the user U in S801 is included in the request to acquire described above.

In S804, after receiving the request to acquire the processing flow information, the application manager 111 acquires the application information 1000 whose application ID is included in the request to acquire from the application information storing unit 160. Subsequently, the application manager 111 sends the application information 1000 acquired from the application information storing unit 160 back to the component manager 302.

Next, in S805, among component IDs defined in the processing flow information 1100 included in the application information 1000 sent back from the application manager 111, the component manager 302 acquires the component ID of a proxy authentication component.

That is, for example, if the processing flow information 1100 illustrated in FIG. 7 is sent back from the application manager 111, the component manager 302 acquires a component ID "authA" of the proxy authentication A component 1310. Hereinafter, in the below description, it is assumed that the component manager 302 acquired the component ID "authA".

It should be noted that, if component IDs of multiple proxy authentication components are defined in the processing flow information 1100 for example, the component manager 302 may acquire the multiple component IDs. For example, if multiple items of processing flow information 1100 are included in the application information 1000 sent back from the application manager 111, the component manager 302 may repeat the operation in step S805 for each item of processing flow information 1100.

Next, in S806, the component manager 302 generates a component corresponding to the component ID acquired in step S805. That is, the component manager 302 generates the proxy authentication A component 1310 corresponding to the component ID "authA" acquired in step S805. It should be noted that the proxy authentication A component 1310 may be generated using the component common I/F 1300.

It should be noted that, if multiple component IDs are acquired in step S805 described above, the component manager 302 generates proxy authentication components corresponding each of the component IDs. In this case, the operation in steps S807 to S810 described later is performed for each of the proxy authentication components generated by the component manager 302.

Next, in S807, the component manager 302 transfers a request to acquire setting information for proxy authentication to the proxy authentication A component 1310 generated in S806 described above. It should be noted that the authentication ticket is included in the request to acquire described above.

In S808, after receiving the request to acquire the setting information for proxy authentication, the proxy authentication A component 1310 transfers a request to confirm authentication information to the authentication service processor 130. Here, the request to confirm authentication information is a request to confirm whether or not authentication information used for proxy authentication has already been saved, and the component ID of the component that transfers the request and the authentication ticket is included in the request to confirm.

In S809, after receiving the request to confirm authentication information, in the basis of the component ID and the authentication ticket included in the request to confirm, the authentication service processor 130 confirms whether or not authentication information of the user U for the storage A is saved in the authentication information table 3000. Subsequently, the authentication service processor 130 sends a confirmation result indicating whether or not authentication information for the storage A of the user U is saved in the authentication information table 3000 to the proxy authentication A component 1310.

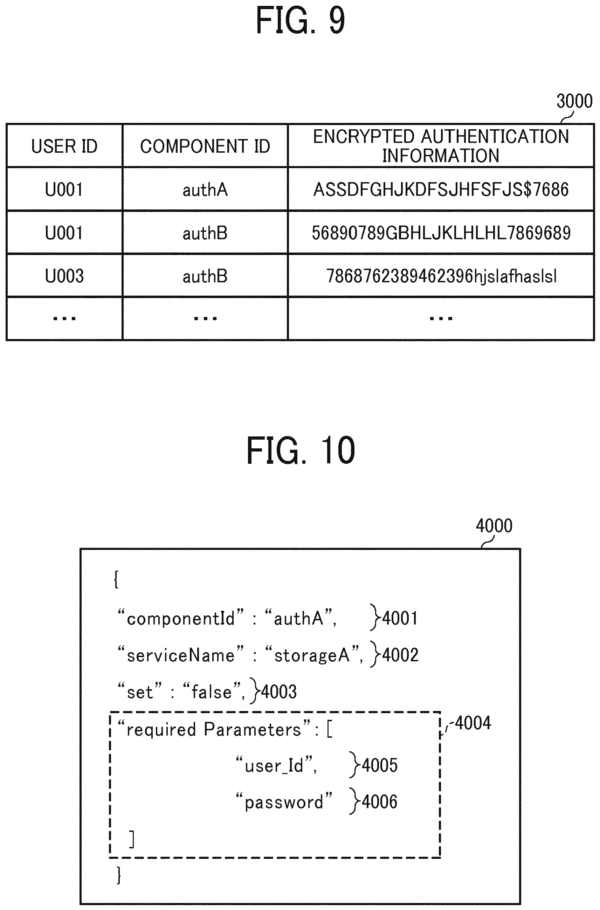

Here, the authentication information table 3000 stored in the authentication information storing unit 180 is described below with reference to FIG. 9. FIG. 9 is a diagram illustrating an authentication information table 3000 according to this embodiment.

In the authentication information table 3000 illustrated in FIG. 9, a user ID, a component ID, and encrypted authentication information are included as data items.

The user ID is identification information for identifying a user in the service providing system 10. The component ID is a component ID of the proxy authentication component. The encrypted authentication information is authentication information encrypted by using an encryption key of the proxy authentication component corresponding to the component ID.

For example, to the user ID "u001", the component ID "authA" and the encrypted authentication information "ASSDFGHJKDFSJHFSFJS$7686" are associated. That is, the authentication information for the storage A of the user whose user ID is "u001" is encrypted and saved.

Similarly, to the user ID "u003", the component ID "authB" and the encrypted authentication information "7868762389462396hjslafhaslsl" are associated. That is, the authentication information for the storage B of the user whose user ID is "u003" is encrypted and saved.

As described above, in the authentication information table 3000, for each user ID and component ID (that is, each external storage system 40), authentication information for each external storage system 40 is encrypted and saved. Hereinafter, the authentication information encrypted and saved in the authentication information table 3000 may be simply referred to as "encrypted authentication information".

As a result, in step S809 described above, the authentication service processor 130 confirms whether or not the encrypted authentication information associated with the combination of the component ID and the user ID included in the authentication ticket exists in the authentication information table 3000.

Next, in S810, in the basis of the confirmation result sent back from the authentication service processor 306, the proxy authentication A component 1310 generates setting information 4000 for proxy authentication illustrated in FIG. 10 for example. Subsequently, the proxy authentication A component 1310 sends the setting information 4000 for proxy authentication back to the authentication information storing application 310 via the component manager 302.

Here, the setting information for proxy authentication generated by the proxy authentication A component 1310 is described below with reference to FIG. 10. FIG. 10 is a diagram illustrating setting information 4000 for proxy authentication according to this embodiment.

The setting information 4000 for proxy authentication illustrated in FIG. 10 includes a component ID 4001 of the proxy authentication A component 1310 and a service name 4002 indicating a name of the external storage system 401 that performs proxy authentication. In addition, the setting information 4000 for proxy authentication illustrated in FIG. 10 includes a saved flag 4003 indicating whether or not the authentication information of the user U for the storage A has already been stored in the authentication information table 3000 and a parameter 4004 indicating input items of authentication information for the storage A.

Here, in the parameter 4004, as input items for authentication information for the storage A, a user ID 4005 and a password 4006 are defined.

It should be noted that, in accordance with the confirmation result sent back from the authentication service processor 130, the proxy authentication A component 1310 sets "true" or "false" to the saved flag 4003.

As described above, the setting information for proxy authentication includes various information for displaying a screen for saving proxy authentication (described later) by the authentication information storing application 310.

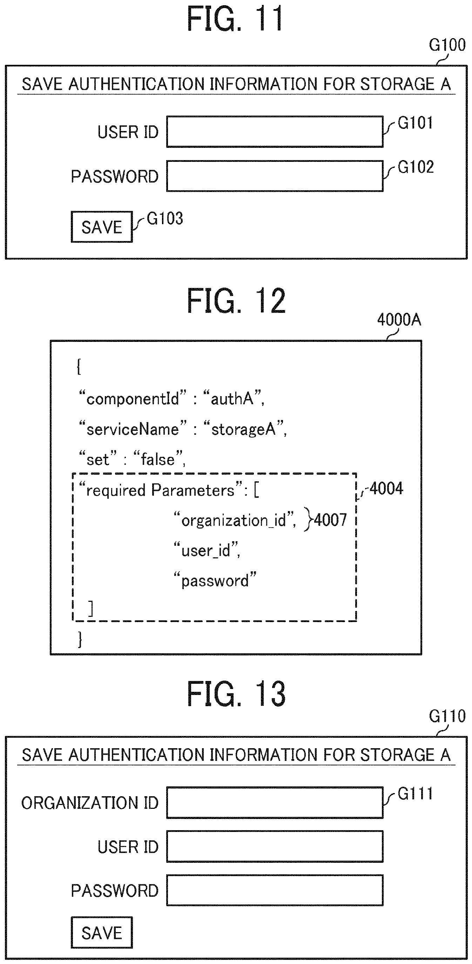

Next, in S811, in the basis of the setting information 4000 for proxy authentication sent back from the component manager 302, the authentication information storing application 310 in the PC terminal 30 displays a screen for saving authentication information for the storage A G100 illustrated in FIG. 11 for example.

Here, a screen for saving authentication information for the storage A G100 displayed by the authentication information storing application 310 is described below with reference to FIG. 11. FIG. 11 is a diagram illustrating a screen for saving authentication information of a storage A G100 according to this embodiment.

The screen for saving authentication information for the storage A G100 illustrated in FIG. 11 includes a user ID input box G101, a password input box G102, and a save button G103.

Here, the user ID input box G101 is displayed since the user ID 4005 is defined in the parameter 4004 included in the setting information 4000 for proxy authentication. Similarly, the password input box G102 is displayed since the password 4006 is defined in the parameter 4004 included in the setting information 4000 for proxy authentication.

As described above, on the screen for saving authentication information used for proxy authentication, the input box for inputting authentication information is displayed by the authentication information storing application 310 in accordance with the parameter defined in the setting information for proxy authentication (parameter indicating the input item for authentication information). For example, if the saved flag 4003 indicates "true", on the screen for saving authentication information for the storage A G100 illustrated in FIG. 11, a message indicating that the authentication information of the user U for the storage A is stored etc. may be displayed.

Here, another screen for saving authentication information for the storage A displayed by the authentication information storing application 310 is described below.

First, in step S810 described above, it is assumed that the proxy authentication A component 1310 sends the setting information 400A for proxy authentication illustrated in FIG. 12 back to the authentication information storing application 310 via the component manager 302. That is, as illustrated in FIG. 12, it is assumed that the setting information 4000A for proxy authentication defining an organization ID 4007 in the parameter 4004 is sent back to the authentication information storing application 310.

In this case, in step S811 described above, in the basis of the setting information 4000A for proxy authentication, the authentication information storing application 310 displays a screen for saving authentication information for the storage A G110 illustrated in FIG. 13 for example. That is, since the organization ID 4007 is defined in the parameter 4004 included in the setting information 4000A for proxy authentication, the authentication information storing application 310 displays the screen for saving authentication information for the storage A G110 including the organization ID input box Gill.

Here, it is assumed that the user U inputs authentication information on the screen for saving authentication information for the storage A G100 illustrated in FIG. 11 and operates to save the authentication information in S812. That is, after inputting the user ID for the storage A in the user ID input box G101 and the password for the storage A in the password input box G102, it is assumed that the user U presses the save button G103 to operate to save the authentication information.

In S813, after receiving the operation of saving the authentication information, the authentication information storing application 310 in the PC terminal 30 transfers a request to save the authentication information to the flow executing unit 301 in the logic processor 112. It should be noted that the authentication information input by the user U (that is, the user ID input in the user ID input box G101 and the password input in the password input box G102) and the authentication ticket are included in the request to save described above.

After receiving the request to save the authentication information, the flow executing unit 301 in the logic processor 112 transfers the request to save to the proxy authentication A component 1310 in S814.

It should be noted that, in step S814, the flow executing unit 301 may generate the proxy authentication A component 1310 by the component manager 302 and transfer the request to save the authentication information to the generated proxy authentication A component 1310.

After receiving the request to save the authentication information, the proxy authentication A component 1310 transfers the request to encrypt and save the authentication information to the authentication information processor 304 in S815. Here, the authentication information input by the user U, the authentication ticket, the component ID of the proxy authentication A component 1310, and the encryption key are included in the request to encrypt and save.

Here, as described above, the encryption key is predefined for each external storage system 40. For example, the encryption key is defined for a function and a class etc. defining the proxy authentication component.

After receiving the request to encrypt and save the authentication information, the authentication information processor 304 encrypts the authentication information using the encryption key included in the request to encrypt and save in S816.

Next, the authentication information processor 304 transfers the request to save the authentication information to the authentication service processor 130 in S817. Here, the authentication information encrypted in step S816 described above, the authentication ticket, and the component ID of the proxy authentication A component 1310 are included in the request to save.

In S818, after receiving the request to save the authentication information, the authentication service processor 130 stores the encrypted authentication information in the authentication information table 3000 associated with the user ID included in the authentication ticket and the component ID of the proxy authentication A component 1310. Subsequently, the authentication service processor 130 sends the saving result back.

As described above, in the information processing system 1 in this embodiment, by using the PC terminal 30, the user may save the authentication information for using the external storage system 40 in the service providing system 10. In addition, in this case, the service providing system 10 in this embodiment encrypts and saves the authentication information by the proxy authentication component defined for each external storage system 40.

As a result, for example, in the information processing system 1 in this embodiment, if the user uses a service cooperating with an external storage system 40 that may not use an authentication method such as OAuth etc., it is possible to reduce security risk such as leaking authentication information etc.

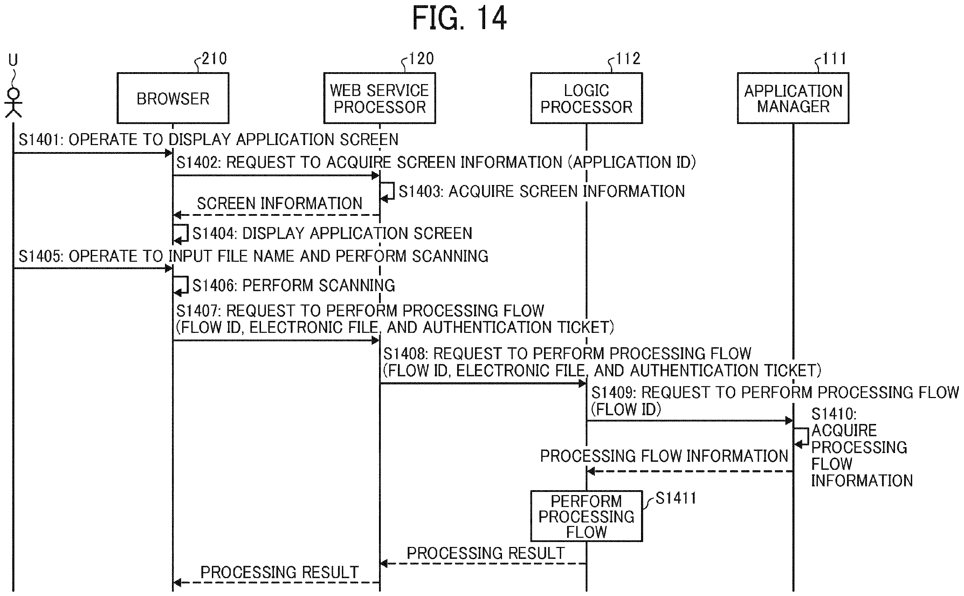

Next, an operation that a user U of the apparatus 20 uses the "scan to storage A" service is described below with reference to FIG. 14. FIG. 14 is a diagram illustrating an operation of using a "scan to storage A" service according to this embodiment.

First, in S1401, the user U of the apparatus 20 operates to display an application screen for the "scan to storage A" service (display operation). For example, on a predetermined screen displayed after logging in the service providing system 10, the user U may perform the operation of displaying the application screen by selecting an application name of the application information 1000 that provides the "scan to storage A" service etc.

After receiving the displaying operation, the browser 210 in the apparatus 20 transfers a request to acquire screen information for displaying the application screen of the "scan to storage A" service to the web service processor 120 in S1402. It should be noted that the request to acquire described above is a Hypertext Transfer Protocol (HTTP) request including the application ID of the application information 1000 that provides the "scan to storage A" service.

In S1403, after receiving the request to acquire screen information, the web service processor 120 acquires screen information 2000 associated to the application ID included in the request to acquire from the screen information storing unit 170. Subsequently, the web service processor 120 sends a HTTP response including the screen information 2000 acquired from the screen information storing unit 170 back to the browser 210.

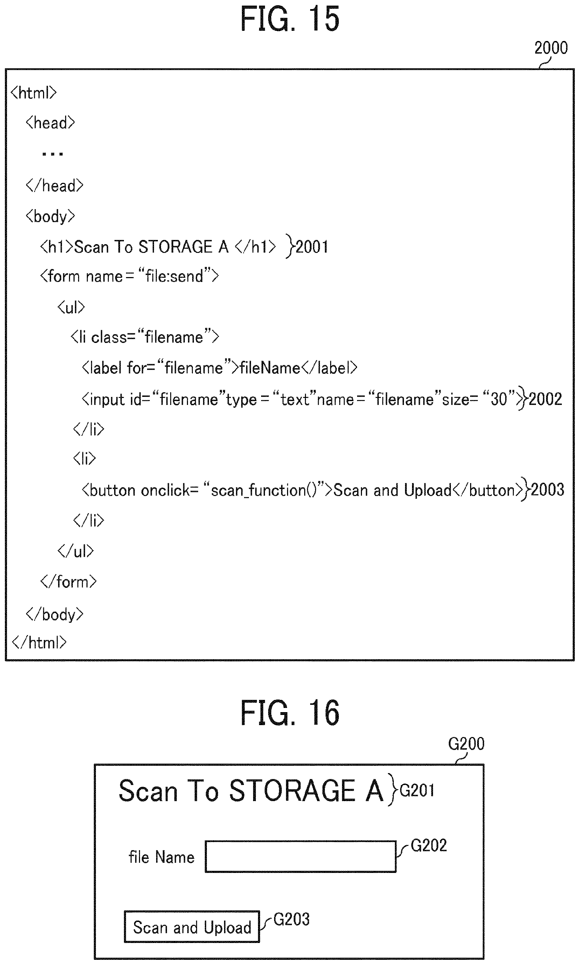

Here, the screen information 2000 for displaying the application screen of the "scan to storage A" service is described below with reference to FIG. 15. FIG. 15 is a diagram illustrating the screen information 2000 for displaying the application screen of the "scan to storage A" service according to this embodiment.

The screen information 2000 illustrated in FIG. 15 is information defined in a HTML format. In the screen information 2000 illustrated in FIG. 15, a title display tag 2001 for displaying a title of the application screen is defined. In addition, in the screen information 2000 illustrated in FIG. 15, a file name input box tag 2002 for displaying a text box for inputting a file name and a scan start button tag 2003 for displaying a button for starting scanning are defined.

As a result, by interpreting the screen information 2000 illustrated in FIG. 15, the browser 210 in the apparatus 20 may display the application screen G200 described later.

After receiving the screen information 2000, on the basis of the screen information 2000, the browser 210 in the apparatus 20 displays the application screen G200 illustrated in FIG. 16 on the control panel 22 in S1404.

Here, the application screen G200 of the "scan to storage A" service is described below with reference to FIG. 16. FIG. 16 is a diagram illustrating an application screen G200 for using a "scan to storage A" service according to this embodiment.

In the application screen G200 illustrated in FIG. 16, a title G201 of the application screen G200, a file name input box G202 for inputting a file name of an electronic file to be uploaded to the storage A, and a scan start button G203 for starting scanning are included.

It should be noted that the title G201, the file name input box G202, and the scan start button G203 are displayed by interpreting the title display tag 2001, the file name input box tag 2002, and the scan start button tag 2003 by the browser 210 respectively.

As described above, in response to the request from the browser 210 of the apparatus 20, the service providing system 10 in this embodiment sends the screen information 2000 defined in a format such as the HTML format that the browser 210 can interpret back. Subsequently, in the basis of the screen information 2000 sent back from the service providing system 10, the apparatus 20 displays the application screen for using the service. As a result, the user may utilize various services provided by the service providing system 10 by using the standard browser 210 installed on the apparatus 20.

The user U of the apparatus 20 inputs the file name in the file name input box G202 on the application screen G200 illustrated in FIG. 16 and presses the scan start button G203 to operate to start scanning in S1405. For example, the user U inputs the file name "test" in the file name input box G202 and presses the scan start button G203 to operate to start scanning.

After receiving the operation of starting scanning, the browser 210 in the apparatus 20 scans a document by using the scanner 26 and generates an electronic file (an image file) that the file name input in the file name input box G202 is given in S1406.

Next, after the electronic file is generated, the browser 210 of the apparatus 20 transfers a request to execute a processing flow to the web service processor 120 in S1407. For example, the request to execute is a HTTP request including a flow ID of the processing flow information 1100 defining the series of operations implementing the "scan to storage A" service and the electronic file generated in step S1406 described above. In addition, the request to execute includes the authentication ticket issued when the user U logged in the service providing system 10.

However, in requesting to execute a processing flow, instead of the flow ID, for example, a Uniform Resource Locator (URL) of the application information 1000, the screen ID of the application screen G200, and the button ID of the scan start button S203 etc. may be included. That is, in the request to execute processing flow, instead of the flow ID, various identification information that can be converted into the flow ID in step S1408 (described later) may be included.

Next, in S1408, after receiving the request to execute the processing flow, the web service processor 120 transfers the request to the logic processor 112 in the input/output service processor 110. For example, if the URL of the application information 1000, the screen ID of the application screen G200, and the scan start button G203 are included in the request to execute the processing flow, the web service processor 120 converts the identification information into the flow ID.

Next, in S1409, after receiving the request to execute the processing flow, the logic processor 112 in the input/output service processor 110 transfers the request to acquire processing flow information to the application manager 111 by using the flow executing unit 301. It should be noted that the flow ID is included in the request to acquire described above.

In S1410, after receiving the request to acquire the processing flow information, the application manager 111 acquires the processing flow information 1100 identified by the flow ID included in the request to acquire from the application information storing unit 160.

Subsequently, the application manager 111 sends the processing flow information 1100 acquired from the application information storing unit 160 back to the logic processor 112. Here, in the description below, it is assumed that the application manager 111 sends the processing flow information 1100 illustrated in FIG. 7 back to the logic processor 112.

Next, in S1411, after receiving the processing flow information 1100 from the application manager 111, the logic processor 112 executes the processing flow in the basis of the processing flow information 1100 described above. That is, the logic processor 112 performs the series of operations (processing flow) implementing the "scan to storage A" service. It should be noted that the execution of the processing flow is described later in detail.

Subsequently, the logic processor 112 sends the operation result of executing the processing flow back to the browser 210 via the web service processor 120. As a result, the service providing system 10 in this embodiment man provide various services (e.g., the "scan to storage A" service) implemented by the series of operations (processing flow) in the basis of the processing flow information 1100.

Here, in the operation of the "scan to storage A" service illustrated in FIG. 14, the browser 210 transfers the request to execute processing flow to the logic processor 112 via the web service processor 120. However, the implementation is not limited to that implementation described above. For example, by calling a web API on the basis of Javascript etc. defined in the screen information 2000, the browser 210 may transfer the request to execute processing flow directly to the logic processor 112 instead of transferring the request via the web service processor 120.

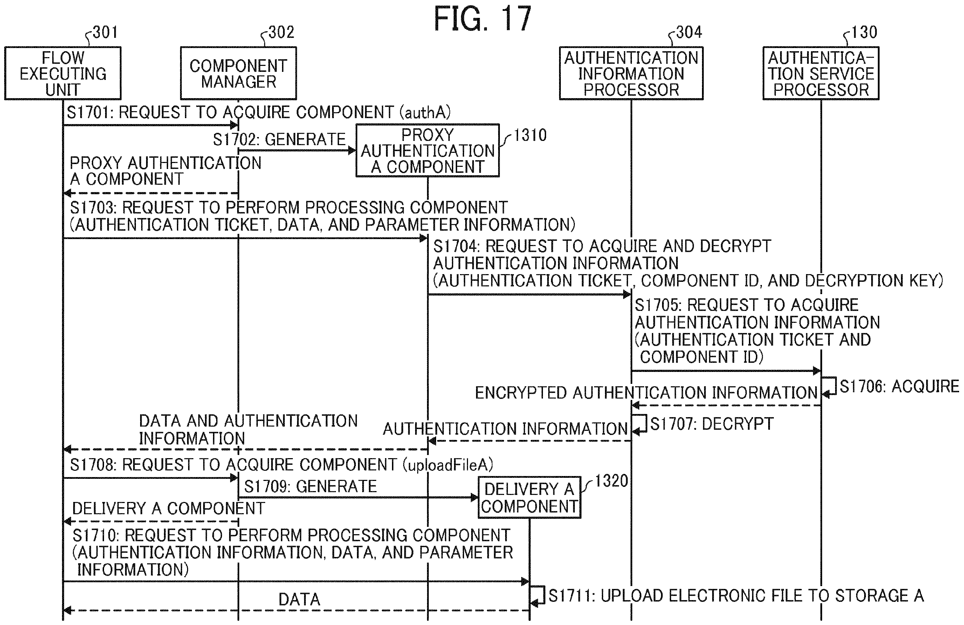

Here, in the description below, an operation of executing processing flow implementing the "scan to storage A" service (the operation in step S1411 in FIG. 14) is described with reference to FIG. 17. FIG. 17 is a sequence diagram illustrating an operation of executing processing flow implementing the "scan to storage A" service according to this embodiment.

First, in S1701, on the basis of the processing flow information 1100 sent back from the application manager 111 in step S1410 in FIG. 14, the flow executing unit 301 transfers a request to acquire component to the component manager 302. That is, the flow executing unit 301 transfers a request to acquire component including "authA" defined in "componentId" in the operation definition 1105 in the processing flow information 1100 illustrated in FIG. 7 to the component manager 302.

In S1702, after receiving the request to acquire component, the component manager 302 generates the proxy authentication A component 1310 corresponding to "authA" included in the request to acquire the above-described component. It should be noted that the proxy authentication A component 1310 may be generated using the component common I/F 1300.

Subsequently, the component manager 302 transfers the generated proxy authentication A component 1310 to the flow executing unit 301. That is, for example, the component manager 302 sends an address in the memory (e.g., the RAM 14) where the proxy authentication A component 1310 is expanded back to the flow executing unit 301.

Here, if the proxy authentication A component 1310 has already been generated, it is not required for the component manager 302 to generate the proxy authentication A component 1310.

In S1703, after receiving the proxy authentication A component 1310, the flow executing unit 301 transfers a request to execute operation of component to the proxy authentication A component 1310. It should be noted that the request to execute operation of component includes the authentication ticket, data, and parameter information.

Here, in step S1703 described above, examples of the data are an address and a path etc. indicating the electronic file (electronic file included in the request to execute processing flow) received from the web service processor 120. In addition, in step S1703 described above, the parameter information is parameter information defined in "parameters" in the operation definition 1105 in the processing flow information 1100 illustrated in FIG. 7.

In S1704, after receiving the request to execute operation of component, the proxy authentication A component 1310 transfers a request to acquire and decrypt authentication information used for proxy authentication for the storage A to the authentication information processor 304. It should be noted that the request to acquire and decrypt authentication information described above includes the authentication ticket, the component ID of the proxy authentication A component 1310, and the decryption key.

Here, as described above, the decryption key is predefined for each external storage system 40. For example, the decryption key described above is defined for a function and a class etc. defining the proxy authentication component.

In S1705, after receiving the request to acquire and decrypt authentication information, the authentication information processor 304 transfers a request to acquire authentication information to the authentication service processor 130. It should be noted that the request to acquire authentication information described above includes the authentication ticket and the component ID of the proxy authentication A component 1310.

In S1706, after receiving the request to save the authentication information, the authentication service processor 130 stores the encrypted authentication information associated with the user ID and the component ID included in the authentication ticket from the authentication information table 3000.

Subsequently, the authentication service processor 130 sends the encrypted authentication information acquired from the authentication information table 3000 back to the authentication information processor 304.

In S1707, after receiving the encrypted authentication information from the authentication service processor 130, the authentication information processor 304 decrypts the encrypted authentication information using the decryption key. Subsequently, the authentication information processor 304 sends the decrypted encrypted authentication information (that is, the authentication information) back to the proxy authentication A component 1310. After that, the proxy authentication A component 1310 sends the authentication information along with the data back to the flow executing unit 301.

As described above, in response to the request from the flow executing unit 301, the proxy authentication A component 1310 requests the authentication information processor 304 to acquire and decrypt the authentication information used for proxy authentication for the storage A. Subsequently, the proxy authentication A component 1310 sends the authentication information acquired and decrypted by the authentication information processor 304 back to the flow executing unit 301.

Next, in S1708, in the basis of the processing flow information 1100 sent back from the application manager 111 in step S1410 in FIG. 14, the flow executing unit 301 transfers a request to acquire component to the component manager 302. That is, the flow executing unit 301 transfers a request to acquire component including "uploadFileA" defined in "componentId" in the operation definition 1106 in the processing flow information 1100 illustrated in FIG. 7 to the component manager 302.

In S1709, after receiving the request to acquire component, the component manager 302 generates the delivery A component 1320 corresponding to "uploadFileA" included in the request to acquire described above. It should be noted that the delivery A component 1320 may be generated using the component common I/F 1300.

Subsequently, the component manager 302 transfers the generated delivery A component 1320 to the flow executing unit 301. That is, for example, the component manager 302 sends an address in the memory (e.g., the RAM 14) where the delivery A component 1320 is expanded back to the flow executing unit 301.

In S1710, after receiving the delivery A component 1320, the flow executing unit 301 transfers a request to execute operation of component to the delivery A component 1320. It should be noted that the request to execute operation of component includes the authentication information, data, and parameter information sent back from the proxy authentication A component 1310.

Here, in step S1710 described above, the data is sent back from the proxy authentication A component 1310 (i.e., the data corresponds to an address and a path etc. indicating the electronic file received from the web service processor 120). In addition, in step S1710 described above, the parameter information is parameter information defined in "parameters" in the operation definition 1106 in the processing flow information 1100 illustrated in FIG. 7.

In S1711, after receiving the request to execute operation of component, the delivery A component 1320 uploads the electronic file indicated by the data to the storage A using the authentication information included in the request to execute operation. In this case, after performing authentication (proxy authentication) with the storage A using the authentication information, the delivery A component 1320 uploads the electronic file to a folder whose folder ID is indicated by the parameter information for example. It should be noted that the delivery A component 1320 may upload an electronic file by requesting the file processor 151 in the external service cooperating unit 150₁ corresponding to the storage A to upload the electronic file.

Subsequently, the delivery A component 1320 sends data indicating the operation result back to the flow executing unit 301.

As described above, the service providing system 10 in this embodiment may provide the "scan to storage A" service to the user U of the apparatus 20. In this case, the service providing system 10 in this embodiment may upload the electronic file by performing proxy authentication by using the authentication information decrypted from the encrypted authentication information preliminarily saved by the user U.

As described above, in the information processing system 1 in this embodiment, the user may save the authentication information for using the external storage system 40 that may not use authentication methods such as OAuth for example in the service providing system 10. In addition, in this case, the information processing system 1 in this embodiment encrypts the authentication information by the proxy authentication component defined for each external storage system 40 using the encryption key different for each proxy authentication component.

In addition, in the information processing system 1 in this embodiment, in case of providing the service implemented by the series of operations cooperating with the external storage system 40, the service providing system 10 performs proxy authentication using the encrypted authentication information preliminarily saved. Furthermore, in this case, the information processing system 1 in this embodiment decrypts the encrypted authentication information by the proxy authentication component defined for each external storage system 40 using the decryption key different for each proxy authentication component.

As a result, for example, in the information processing system 1 in this embodiment, if the user uses a service cooperating with an external storage system 40 that may not use an authentication method such as OAuth etc., it is possible to reduce security risk such as leaking authentication information etc.

The embodiments described above provide an information processing apparatus that is capable of performing proxy authentication in a sequence of operations in cooperation with an external service.

Numerous additional modifications and variations are possible in light of the above teachings. It is therefore to be understood that within the scope of the appended claims, the disclosure of the present invention may be practiced otherwise than as specifically described herein.

For example, elements and/or features of different illustrative embodiments may be combined with each other and/or substituted for each other within the scope of this disclosure and appended claims.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing apparatus (10) capable of communicating with one or more apparatuses (20), comprising:
a flow storing unit (160) to store, for each series of operations to be performed in cooperation with an external service, program identification information for identifying each of one or more programs that performs one operation of the series of operations and flow information defining an order of executing the one or more programs performing the series of operations, associated with flow identification information for identifying the flow information;
an authentication storing unit (180) to store authentication information used for authenticating the external service associated with user identification information for identifying the user;
a receiving unit (120) to receive information on electronic data, flow identification information, and user identification information, from one of the apparatuses (20);
an acquisition unit (111) to acquire, from among the flow information stored in the flow storing unit (160), flow information associated with the flow identification information received by the receiving unit (120); and
an executing unit (112) to execute the series of operations in cooperation with the external service using the electronic data based on the information on the electronic data received by the receiving unit (120) by executing each of the programs identified by the program identification information defined in the flow information acquired by the acquisition unit (111) in accordance with the order of executing the programs defined in the flow information,
wherein, in executing the series of operations in cooperation with the external service, the executing unit (112) authenticates the external service by using the authentication information stored in the authentication storing unit (180) associated with the user identification information received by the receiving unit (120)
and wherein the executing unit (112):
executes a first program among the programs each identified by the program identification information to acquire the authentication information stored in the authentication storing unit (180) associated with the user identification information received by the receiving unit (120), and
executes a second program among the programs each identified by the program identification information to authenticate the external service using the authentication information acquired by the first program;
and further wherein the authentication storing unit (180) stores, for each of a plurality of users, (i) respective said authentication information used for authenticating the external service, associated with the user identification information for identifying the user who uses the apparatus (20) connected to the information processing apparatus (10), and (ii) respective said program identification information for identifying the first program.

2. The information processing apparatus (10) according to claim 1,
wherein the authentication information is encrypted authentication information, and
the executing unit (112) executes the first program to decrypt the authentication information acquired from the authentication storing unit (180) and executes the second program to authenticate the external service by using the decrypted authentication information.

3. The information processing apparatus (10) according to claim 2,
wherein the executing unit (112) executes the first program to decrypt the authentication information acquired from the authentication storing unit (180) using a decryption key specific to the external service cooperating with the information processing apparatus (10).

4. The information processing apparatus (10) according to any one of claims 1 to 3,
wherein the second program authenticates the external service and uploads the electronic data to the external service.

5. The information processing apparatus (10) according to any one of claims 1 to 4,
wherein the order of executing the programs is an order of defining the program identification information of each program in the flow information.

6. An information processing system comprising:
the information processing apparatus (10) according to any one of claims 1 to 5; and
the one or more apparatuses (20) said information processing apparatus (10) is capable of communicating with.

7. A method of processing information performed by an information processing apparatus (10) capable of communicating with one or more apparatuses (20), the method comprising:
storing, in a memory, for each series of operations to be performed in cooperation with an external service, program identification information for identifying each of one or more programs that performs each operation of the series of operations and flow information defining an order of executing the one or more programs, associated with flow identification information for identifying the flow information;
storing, in the memory, for each one of a plurality of users who use the apparatuses (20), authentication information used for authenticating the external service associated with user identification information for identifying the user;
receiving information on electronic data, flow identification information, and user identification information, from one of the apparatuses (20);
acquiring, from among items of the flow information stored in the memory, flow information associated with the flow identification information received by the receiving; and
executing the series of operations using the electronic data based on the information on the electronic data received by the receiving, by executing each of the programs identified by the program identification information defined in the flow information acquired by the acquiring in accordance with the order of executing the programs defined in the flow information,
wherein the executing includes executing the series of operations in cooperation with the external service by authenticating the external service by using the authentication information stored in the memory associated with the received user identification information,
and wherein the step of executing programs includes:
executing a first program among the programs each identified by the program identification information to acquire the authentication information stored in the memory associated with the received user identification information, and
executing a second program among the programs each identified by the program identification information to authenticate the external service using the acquired authentication information
and wherein the step of storing includes:
storing, for each of a plurality of users, (i) respective said authentication information used for authenticating the external service, associated with the user identification information for identifying the user who uses the apparatus (20) connected to the information processing apparatus (10), and (ii) respective said program identification information for identifying the first program.

8. A carrier means carrying computer readable code for controlling a computer to carry out the method of claim 7.

## Patentansprüche

1. Informationsverarbeitungsvorrichtung (10), die zum Kommunizieren mit einer oder mehreren Vorrichtungen (20) imstande ist, umfassend:
eine Ablaufspeichereinheit (160), um für jede Folge von Operationen, die in Zusammenarbeit mit einem externen Dienst durchzuführen sind, Programmidentifizierungsinformationen zum Identifizieren eines jeden von einem oder mehreren Programmen, das eine Operation aus der Folge von Operationen durchführt, und Ablaufinformationen, die eine Reihenfolge des Ausführens des einen oder der mehreren Programme definiert, welche die Folge von Operationen durchführen, in Verbindung mit Ablaufidentifizierungsinformationen zum Identifizieren der Ablaufinformationen zu speichern;
eine Authentifizierungsspeichereinheit (180), um Authentifizierungsinformationen, die verwendet werden, um den externen Dienst zu identifizieren, in Verbindung mit Benutzeridentifizierungsinformationen zum Identifizieren des Benutzers zu speichern;
eine Empfangseinheit (120), um Informationen über elektronische Daten, Ablaufidentifizierungsinformationen und Benutzeridentifizierungsinformationen von einer der Vorrichtungen (20) zu empfangen;
eine Erfassungseinheit (111), um aus den Ablaufinformationen, die in der Ablaufspeichereinheit (160) gespeichert sind, Ablaufinformationen zu erfassen, die mit den durch die Empfangseinheit (120) empfangenen Ablaufidentifizierungsinformationen verbunden sind; und
eine ausführende Einheit (112), um die Folge von Operationen in Zusammenarbeit mit dem externen Dienst unter Verwendung der elektronischen Daten auf der Grundlage der durch die Empfangseinheit (120) empfangenen Informationen über die elektronischen Daten auszuführen, indem jedes der Programme, die durch die Programmidentifizierungsinformationen identifiziert werden, die in den durch die Erfassungseinheit (111) erfassten Ablaufinformationen definiert sind, gemäß der Reihenfolge des Ausführens der in den Ablaufinformationen definierten Programme ausgeführt wird,
wobei beim Ausführen der Folge von Operationen in Zusammenarbeit mit dem externen Dienst die ausführende Einheit (112) den externen Dienst authentifiziert, indem sie die in der Authentifizierungsspeichereinheit (180) gespeicherten Authentifizierungsinformationen verwendet, die mit den durch die Empfangseinheit (120) empfangenen Benutzeridentifizierungsinformationen verbunden sind,
und wobei die ausführende Einheit (112):
ein erstes Programm unter den Programmen ausführt, die jeweils durch die Programmidentifizierungsinformationen identifiziert werden, um die in der Authentifizierungsspeichereinheit (180) gespeicherten Authentifizierungsinformationen zu erfassen, die mit den durch die Empfangseinheit (120) empfangenen Benutzeridentifizierungsinformationen verbunden sind, und
ein zweites Programm unter den Programmen ausführt, die jeweils durch die Programmidentifizierungsinformationen identifiziert werden, um den externen Dienst unter Verwendung der durch das erste Programm erfassten Authentifizierungsinformationen zu authentifizieren;
und wobei ferner die Authentifizierungsspeichereinheit (180) für jeden aus einer Vielzahl von Benutzern speichert: (i) die jeweiligen Authentifizierungsinformationen, die zum Authentifizieren des externen Dienstes verwendet werden, verbunden mit den Benutzeridentifizierungsinformationen zum Identifizieren des Benutzers, der die Vorrichtung (20) verwendet, die mit der Informationsverarbeitungsvorrichtung (10) verbunden ist, und (ii) die jeweiligen Programmidentifizierungsinformationen zum Identifizieren des ersten Programms.

2. Informationsverarbeitungsvorrichtung (10) nach Anspruch 1,
wobei die Authentifizierungsinformationen verschlüsselte Authentifizierungsinformationen sind, und
die ausführende Einheit (112) das erste Programm ausführt, um die von der Authentifizierungsspeichereinheit (180) erfassten Authentifizierungsinformationen zu entschlüsseln, und das zweite Programm ausführt, um den externen Dienst durch Verwenden der entschlüsselten Authentifizierungsinformationen zu authentifizieren.

3. Informationsverarbeitungsvorrichtung (10) nach Anspruch 2,
wobei die ausführende Einheit (112) das erste Programm ausführt, um die von der Authentifizierungsspeichereinheit (180) erfassten Authentifizierungsinformationen unter Verwendung eines Entschlüsselungsschlüssels zu entschlüsseln, der für den externen Dienst spezifisch ist, der mit der Informationsverarbeitungsvorrichtung (10) zusammenarbeitet.

4. Informationsverarbeitungsvorrichtung (10) nach einem der Ansprüche 1 bis 3,
wobei das zweite Programm den externen Dienst authentifiziert und die elektronischen Daten zum externen Dienst hochlädt.

5. Informationsverarbeitungsvorrichtung (10) nach einem der Ansprüche 1 bis 4,
wobei die Reihenfolge des Ausführens der Programme eine Reihenfolge des Definierens der Programmidentifizierungsinformationen jedes Programms in den Ablaufinformationen ist.

6. Informationsverarbeitungssystem, umfassend:
die Informationsverarbeitungsvorrichtung (10) nach einem der Ansprüche 1 bis 5; und
die eine oder mehreren Vorrichtungen (20), mit denen die Informationsverarbeitungsvorrichtung (10) zu kommunizieren imstande ist.

7. Verfahren zum Verarbeiten von Informationen, das durch eine Informationsverarbeitungsvorrichtung (10) durchgeführt wird, die zum Kommunizieren mit einer oder mehreren Vorrichtungen (20) imstande ist, wobei das Verfahren Folgendes umfasst:
für jede Folge von Operationen, die in Zusammenarbeit mit einem externen Dienst durchzuführen sind, in einem Speicher erfolgendes Speichern von Programmidentifizierungsinformationen zum Identifizieren eines jeden von einem oder mehreren Programmen, das eine Operation aus der Folge von Operationen durchführt, und von Ablaufinformationen, die eine Reihenfolge des Ausführens des einen oder der mehreren Programme definiert, in Verbindung mit Ablaufidentifizierungsinformationen zum Identifizieren der Ablaufinformationen;
für jeden aus einer Vielzahl von Benutzern, welche die Vorrichtungen (20) verwenden, erfolgendes Speichern von Authentifizierungsinformationen, die zum Authentifizieren des externen Dienstes verwendet werden, im Speicher in Verbindung mit Benutzeridentifizierungsinformationen zum Identifizieren des Benutzers;
Empfangen von Informationen über elektronische Daten, Ablaufidentifizierungsinformationen und Benutzeridentifizierungsinformationen von einer der Vorrichtungen (20);
aus Elementen der im Speicher gespeicherten Ablaufinformationen erfolgendes Erfassen von Ablaufinformationen, die mit den durch das Empfangen empfangenen Ablaufidentifizierungsinformationen verbunden ist; und
Ausführen der Folge von Operationen unter Verwendung der elektronischen Daten auf der Grundlage der Informationen über die durch das Empfangen empfangenen elektronischen Daten, indem jedes der Programme, die durch die Programmidentifizierungsinformationen identifiziert werden, die in der durch das Erfassen erfassten Ablaufinformationen definiert sind, gemäß der Reihenfolge des Ausführens der in den Ablaufinformationen definierten Programme ausgeführt wird,
wobei das Ausführen das Ausführen der Folge von Operationen in Zusammenarbeit mit dem externen Dienst durch Authentifizieren des externen Dienstes durch Verwenden der im Speicher gespeicherten Authentifizierungsinformationen, die mit den empfangenen Benutzeridentifizierungsinformationen verbunden sind, einschließt,
und wobei der Schritt des Ausführens von Programmen Folgendes einschließt:
Ausführen eines ersten Programms unter den Programmen, die jeweils durch die Programmidentifizierungsinformationen identifiziert werden, um die im Speicher gespeicherten Authentifizierungsinformationen zu erfassen, die mit den empfangenen Benutzeridentifizierungsinformationen verbunden sind, und
Ausführen eines zweiten Programms unter den Programmen, die jeweils durch die Programmidentifizierungsinformationen identifiziert werden, um den externen Dienst unter Verwendung der erfassten Authentifizierungsinformationen zu authentifizieren,
und wobei der Schritt des Speicherns Folgendes einschließt:
für jeden aus einer Vielzahl von Benutzern erfolgendes Speichern (i) der jeweiligen Authentifizierungsinformationen, die zum Authentifizieren des externen Dienstes verwendet werden, in Verbindung mit den Benutzeridentifizierungsinformationen zum Identifizieren des Benutzers, der die Vorrichtung (20) verwendet, die mit der Informationsverarbeitungsvorrichtung (10) verbunden ist, und (ii) der jeweiligen Programmidentifizierungsinformationen zum Identifizieren des ersten Programms.

8. Trägermittel, das computerlesbaren Code zum Steuern eines Computers, um das Verfahren nach Anspruch 7 auszuführen, trägt.

## Revendications

1. Appareil de traitement d'informations (10) en mesure de communiquer avec un ou plusieurs appareils (20), comprenant :
une unité de stockage de flux (160) pour stocker, pour chaque série d'opérations à mettre en œuvre en coopération avec un service externe, des informations d'identification de programme pour identifier chacun d'un ou plusieurs programmes mettant en œuvre une opération de la série d'opérations et des informations de flux définissant un ordre d'exécution dudit un ou desdits plusieurs programmes mettant en œuvre la série d'opérations, associées à des informations d'identification de flux pour identifier les informations de flux ;
une unité de stockage d'authentification (180) pour stocker des informations d'authentification utilisées en vue d'authentifier le service externe, associées à des informations d'identification d'utilisateur pour identifier l'utilisateur ;
une unité de réception (120) pour recevoir des informations sur des données électroniques, des informations d'identification de flux et des informations d'identification d'utilisateur, à partir de l'un des appareils (20) ;
une unité d'acquisition (111) pour acquérir, parmi les informations de flux stockées dans l'unité de stockage de flux (160), des informations de flux associées aux informations d'identification de flux reçues par l'unité de réception (120) ; et
une unité d'exécution (112) pour exécuter la série d'opérations en coopération avec le service externe, en utilisant les données électroniques, sur la base des informations sur les données électroniques reçues par l'unité de réception (120) en exécutant chacun des programmes identifiés par les informations d'identification de programme définies dans les informations de flux acquises par l'unité d'acquisition (111) conformément à l'ordre d'exécution des programmes défini dans les informations de flux ;
dans lequel, dans le cadre de l'exécution de la série d'opérations en coopération avec le service externe, l'unité d'exécution (112) authentifie le service externe en utilisant les informations d'authentification stockées dans l'unité de stockage d'authentification (180) associées aux informations d'identification d'utilisateur reçues par l'unité de réception (120) ;
et dans lequel l'unité d'exécution (112) :
exécute un premier programme parmi les programmes qui sont chacun identifiés par les informations d'identification de programme, pour acquérir les informations d'authentification stockées dans l'unité de stockage d'authentification (180) associées aux informations d'identification d'utilisateur reçues par l'unité de réception (120) ; et
exécute un second programme parmi les programmes qui sont chacun identifiés par les informations d'identification de programme pour authentifier le service externe en utilisant les informations d'authentification acquises par le premier programme ;
et dans lequel en outre l'unité de stockage d'authentification (180) stocke, pour chacun parmi une pluralité d'utilisateurs, (i) lesdites informations d'authentification respectives utilisées pour authentifier le service externe, associées aux informations d'identification d'utilisateur pour identifier l'utilisateur qui utilise l'appareil (20) connecté à l'appareil de traitement d'informations (10), et (ii) lesdites informations d'identification de programme respectives pour identifier le premier programme.

2. Appareil de traitement d'informations (10) selon la revendication 1,
dans lequel les informations d'authentification sont des informations d'authentification chiffrées ; et
l'unité d'exécution (112) exécute le premier programme pour déchiffrer les informations d'authentification acquises auprès de l'unité de stockage d'authentification (180), et exécute le second programme pour authentifier le service externe en utilisant les informations d'authentification déchiffrées.

3. Appareil de traitement d'informations (10) selon la revendication 2,
dans lequel l'unité d'exécution (112) exécute le premier programme pour déchiffrer les informations d'authentification acquises auprès de l'unité de stockage d'authentification (180), en utilisant une clé de déchiffrement spécifique au service externe coopérant avec l'appareil de traitement d'informations (10).

4. Appareil de traitement d'informations (10) selon l'une quelconque des revendications 1 à 3,
dans lequel le second programme authentifie le service externe et télécharge les données électroniques vers le service externe.

5. Appareil de traitement d'informations (10) selon l'une quelconque des revendications 1 à 4,
dans lequel l'ordre d'exécution des programmes est un ordre de définition des informations d'identification de programme de chaque programme dans les informations de flux.

6. Système de traitement d'informations comprenant :
l'appareil de traitement d'informations (10) selon l'une quelconque des revendications 1 à 5 ; et
ledit un ou lesdits plusieurs appareils (20) avec lesquels ledit appareil de traitement d'informations (10) est en mesure de communiquer.

7. Procédé de traitement d'informations mis en œuvre par un appareil de traitement d'informations (10) en mesure de communiquer avec un ou plusieurs appareils (20), le procédé comprenant les étapes ci-dessous consistant à :
stocker, dans une mémoire, pour chaque série d'opérations à mettre en œuvre en coopération avec un service externe, des informations d'identification de programme pour identifier chacun d'un ou plusieurs programmes mettant en œuvre une opération de la série d'opérations et des informations de flux définissant un ordre d'exécution dudit un ou desdits plusieurs programmes, associées à des informations d'identification de flux pour identifier les informations de flux ;
stocker, dans la mémoire, pour chacun parmi une pluralité d'utilisateurs utilisant les appareils (20), des informations d'authentification utilisées en vue d'authentifier le service externe associées à des informations d'identification d'utilisateur pour identifier l'utilisateur ;
recevoir des informations sur des données électroniques, des informations d'identification de flux et des informations d'identification d'utilisateur, à partir de l'un des appareils (20) ;
acquérir, parmi des éléments des informations de flux stockées dans la mémoire, des informations de flux associées aux informations d'identification de flux reçues à l'étape de réception ; et
exécuter la série d'opérations en utilisant les données électroniques, sur la base des informations sur les données électroniques reçues à l'étape de réception, en exécutant chacun des programmes identifiés par les informations d'identification de programme définies dans les informations de flux acquises à l'étape d'acquisition conformément à l'ordre d'exécution des programmes défini dans les informations de flux ;
dans lequel, l'étape d'exécution comprend l'exécution de la série d'opérations en coopération avec le service externe, en authentifiant le service externe en utilisant les informations d'authentification stockées dans la mémoire, associées aux informations d'identification d'utilisateur reçues ;
et dans lequel l'étape d'exécution de programmes inclut les étapes ci-dessous consistant à :
exécuter un premier programme parmi les programmes qui sont chacun identifiés par les informations d'identification de programme, pour acquérir les informations d'authentification stockées dans la mémoire, associées aux informations d'identification d'utilisateur reçues ; et
exécuter un second programme parmi les programmes qui sont chacun identifiés par les informations d'identification de programme pour authentifier le service externe en utilisant les informations d'authentification acquises ;
et dans lequel l'étape de stockage consiste à :
stocker, pour chacun parmi une pluralité d'utilisateurs, (i) lesdites informations d'authentification respectives utilisées pour authentifier le service externe, associées aux informations d'identification d'utilisateur pour identifier l'utilisateur qui utilise l'appareil (20) connecté à l'appareil de traitement d'informations (10), et (ii) lesdites informations d'identification de programme respectives pour identifier le premier programme.

8. Support porteur portant un code lisible par ordinateur pour commander à un ordinateur de mettre en œuvre le procédé selon la revendication 7.
